# EUROPEAN PATENT SPECIFICATION

(11) **EP 2 359 465 B1**
(45) Date of publication and mention of the grant of the patent: **25.01.2017**
(21) Application number: 09828621.4
(22) Date of filing: 19.11.2009
(51) Int. Cl.: F16H 61/32

(54) **GEAR CONTROL SYSTEM AND CONTRAL METHOD THEREOF**
GETRIEBESTEUERUNGSSYSTEM UND STEUERVERFAHREN DAFÜR
SYSTÈME DE COMMANDE DE BOÎTE DE VITESSE ET SON PROCÉDÉ DE COMMANDE

(30) Priority: 26.11.2008 CN 200810178429
(43) Date of publication of application: 24.08.2011
(73) Proprietor: Byd Company Limited, Shenzhen, Guangdong 518118 (CN)
(72) Inventor: DING, Xianggen, Shenzhen Guangdong 518118 (CN); ZU, Bo, Shenzhen Guangdong 518118 (CN); ZHOU, Xuguang, Shenzhen Guangdong 518118 (CN)
(74) Representative: Gulde & Partner
(86) International application number: PCT/CN2009/075024
(87) International publication number: WO 2010/060361

(56) References cited:
- CN-A- 101 359 889
- CN-Y- 2 759 832
- DE-A1- 10 027 330
- JP-A- 5 064 482
- JP-A- 2001 032 924
- JP-A- 2002 262 541
- JP-A- 2002 323 127
- US-A- 4 998 444
- US-A- 5 281 902
- US-A1- 2003 222 617
- US-B2- 6 870 335
- US-B2- 7 161 314

## Description

### FIELD OF THE INVENTION

The present invention relates to an electric vehicle control system, particularly, to a gear control system and method of the same, see for instance US-B-7161314 in which an electric motor is used to shift gears in a transmission.

### BACKGROUND OF THE INVENTION

The gear control system is used for actuating the switched reluctance motor to lock or unlock the gear-box when the electric vehicle is at a park position so as to approach the purpose of parking or driving. The work principle of the switched reluctance motor is the same as the reactive step motor. The switched reluctance motor is given a special modulated pulse and then rotated to an aim position. That is, by the special modulated pulse the step number and rotation angle of the switched reluctance motor are controlled. The load of locking and unlocking gear-box is different as the electric vehicle is in different situations. And the electric power changes when the electric load of the vehicle changes. When the load is changed the switched reluctance motor may produce a step-out (out-of synchronism phenomena). In order to eliminate the bad influence of the step-out of the motor, it needs to improve the gear control system so that the motor can be rotated to the correct aim gear.

### SUMMARY OF THE INVENTION

In viewing thereof, the present invention provides an improved gear control system and method in electric vehicle which ensures that the motor is rotated to the aim gear when the motor occurs step-out.

According to an embodiment of the present invention, the gear control system comprises a pulse modulating circuit, a motor and a central processing unit which is connected to the pulse modulating circuit and controls rotation of the motor from the original gear to the aim gear via the pulse modulating circuit; wherein the control system also comprises a motor position detecting device connected to the central processing unit and used for detecting the motor rotation position and sending the information of the motor rotation position to the central processing unit, the central processing unit is further used for determining whether the motor reaches the aim gear according to the information of the motor rotation position and actuating the pulse modulating circuit to resend a pulse to actuate the motor to reach the aim gear when the motor does not reach the aim gear.

Preferably the motor position detecting device comprises a Hall-effect sensor and a Hall-effect information collecting circuit; wherein the Hall-effect sensor is connected to the Hall-effect information collecting circuit and is used for generating Hall-effect information by inducting the rotation position of the motor and sending Hall-effect information to the Hall-effect information collecting circuit, the Hall-effect information collecting circuit is connected to the central processing unit and is used for collecting Hall-effect information and sending Hall-effect information to the central processing unit, the central processing unit ascertains the rotation position of the motor by the Hall-effect information.

The central processing unit may be further used for obtaining the amount of step-out of the motor according to the information of the motor rotation position and ascertaining the amount of the pulses according to the amount of the step-out when the motor does not reach the aim gear.

In a preferred embodiment, the central processing unit determines whether the motor reaches the aim gear after the motor stops rotating.

The central processing unit preferably comprises an information collecting unit connected to the motor position detecting device and for collecting the information of the motor rotation position from the motor position detecting device; a determining unit connected to the information collecting unit and for receiving the information of the motor rotation position from the information collecting unit to determine whether the motor reaches the aim gear; a control unit connected to the determining unit and the pulse modulating circuit, which is used for controlling the rotation of the motor from the original gear to the aim gear via the pulse modulating circuit, and used for actuating the pulse modulating circuit to resend a pulse when the motor does not reach the aim gear.

The control system may further comprise a memorizer connected to the central processing unit, wherein the central processing unit obtains the original gear of the motor from the memorizer and stores the aim gear into the memorizer when the motor reaches the aim gear.

According to an embodiment of the present invention, a method of controlling the gear, comprises: controlling rotation of the motor from the original gear to the aim gear in a pulse modulating way; wherein the method further comprises: detecting the rotation position of the motor; determining whether the motor reaches the aim gear according to the information of the rotation position of the motor; resending a pulse to actuate the motor to reach the aim gear when the motor does not reach the aim gear.

The gear control system and method controls the motor in a closed loop via the motor position detecting device and can detect the rotation position of motor after the motor stops rotating to determine whether the motor reaches the aim gear. If the motor does not reach the aim gear, the gear control system resends a pulse to actuate the motor to rotate to the aim gear. So the gear control system and method according to the present invention can actuate the motor to rotate precisely to the aim gear. Therefore, the present invention improves significantly the control precision of the motor gear.

In a preferred embodiment of the method, the step of detecting the rotation position of the motor comprises detecting the rotation position of the motor and generating Hall-effect information; collecting the Hall-effect information and ascertaining the rotation position of the motor according the Hall-effect information.

Further, the method may comprise obtaining the amount of the step-out of the motor according to the information of the motor rotation position and ascertaining the amount of the pulses needed to resend according to the amount of the step-out when the motor does not reach the aim gear.

Preferably, the step of determining whether the motor reaches the aim gear according to the information of the rotation position of the motor is performed after the motor stops rotating.

Furthermore, the method may comprise obtaining the original gear from the memorizer; and storing the aim gear into the memorizer when the motor reaches the aim gear.

### BRIEF DESCRIPTION OF THE DRAWINGS

The aforementioned features and advantages of the invention as well as additional features and advantages thereof will be more clearly understood hereinafter as a result of a detailed description of embodiments when taken in conjunction with the drawings.
Fig.1 illustrates the gear control system of one embodiment of the invention.
Fig. 2 illustrates the gear control method of one embodiment of the invention.
Fig. 3(1) and Fig. 3(2) are charts illustrating the Hall-effect signals of the motor position detecting device.
Fig.4 (1) shows an embodiment of the information ring.

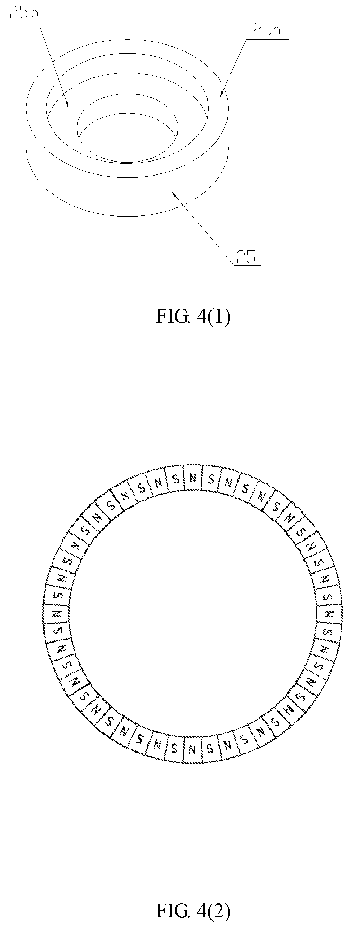

Fig.4 (2) shows the magnetic poles arranged on the outer-circle of the information ring.

### DETAILED DESCRIPTION OF THE EMBODIMENTS

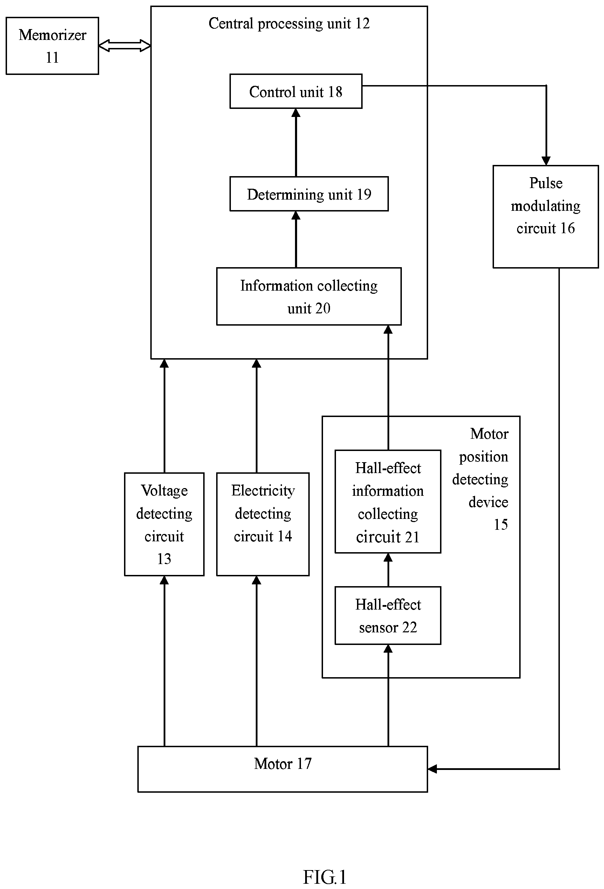

As shown in Fig. 1, the gear control system comprises a pulse modulating circuit 16, a motor 17, and a central processing unit 12 connected to the pulse modulating circuit 16 for controlling rotation of the motor 17 from the original gear to the aim gear via the pulse modulating circuit 16, the control system also comprises a motor position detecting device 15 which is connected to the central processing unit 12 and is used for detecting the motor rotation position and sending the information of the motor rotation position to the central processing unit 12, the central processing unit 12 is further used for determining whether the motor 17 reaches the aim gear according to the information of the motor rotation position and actuating the pulse modulating circuit 16 to resend a pulse to actuate the motor 17 to reach the aim gear when the motor 17 did not reach the aim gear.

According to an embodiment of the present invention, the motor position detecting device 15 comprises a Hall-effect sensor 22 and a Hall-effect information collecting circuit 21. The Hall-effect sensor 22 is connected to the Hall-effect information collecting circuit 21. The Hall-effect information collecting circuit 21 is also connected to the central processing unit 12. The Hall-effect sensor 22 is used for generating Hall-effect information by inducting the rotation position of the motor and sending Hall-effect information to the Hall-effect information collecting circuit 21. The Hall-effect information collecting circuit 21 is used for collecting the Hall-effect information and sending the Hall-effect information to the central processing unit 12.

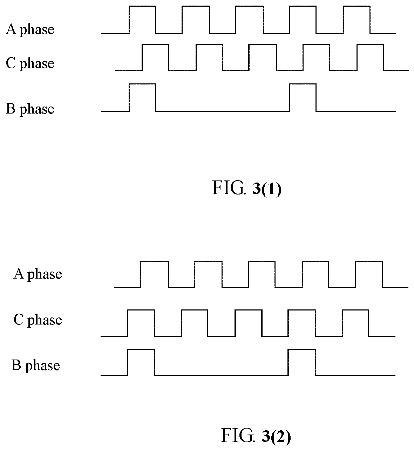

According to an embodiment of the present invention, the Hall-effect sensor 22 in the motor position detecting device 15 comprises three Hall-effect CMOS chips which are used for detecting rotation of the motor 17. Each of the three Hall-effect sensors generates a group of Hall-effect information which is collected by the Hall-effect information collecting circuit 21. Fig. 3(1) and Fig. 3(2) are sketch charts illustrating the Hall-effect information of the motor position detecting device 15. The Hall-effect sensors in the motor position detecting device 15 generate three groups of Hall-effect information: A phase Hall-effect information, B phase Hall-effect information and C phase Hall-effect information. The rotation direction of the motor 17 can be determined by comparing the phase relation between the A phase Hall-effect information, B phase Hall-effect information and C phase Hall-effect information. The three Hall-effect CMOS chips are positioned under the information ring 25 (shown in Fig.4(1)) which is in the motor 17 and connected to the rotor, and fixed to the back-end cover of the motor 17. The two Hall-effect CMOS chips which generate A phase Hall-effect information and C phase Hall-effect information are in the same circle whose center is the axis of the rotor. The circle and the outer-circle 25a of the information ring 25 have the same radius. As shown in Fig.4(1), there are N magnetic poles distributed in the outer-circle 25a of the information ring. Fig.4(2) shows the arrangement of the magnetic poles on the outer-circle 25a of the information ring. The Hall-effect CMOS chips which generate A phase Hall-effect information and C phase Hall-effect information generate Hall-effect information in the magnetic field of the magnetic poles. The interval of the magnetic poles next to each other is 360/N degree. Thus, the interval of the Hall-effect CMOS chips of A phase Hall-effect information and C phase Hall-effect information is θ, wherein 360/N<θ<360-360/N, and preferably 2<N<100. According to an embodiment of the present invention, N is 48. The Hall-effect CMOS chips which generates B phase Hall-effect information is positioned in another circle whose center is the axis of the rotor. The diameter of the circle corresponding to the Hall-effect CMOS chips generating B phase Hall-effect information is smaller than that of the circle corresponding to the Hall-effect CMOS chips generating A/C phase Hall-effect information, and is the same as that of the inner-circle 25b of the information ring. The Hall-effect CMOS chip of B phase Hall-effect information is in any point of the inner-circle 25b of the information ring.

Fig. 3(1) shows the phase relation of the A phase Hall-effect information, B phase Hall-effect information and C phase Hall-effect information when the motor rotates towards the locking direction. Fig. 3(2) shows the phase relation of the A phase Hall-effect information, B phase Hall-effect information and C phase Hall-effect information when the motor rotates towards the unlocking direction. Fig. 3 also shows that if there is the phenomenon of step-out and how to obtain the amount of the step-out of the motor by the central processing unit 12 according to an embodiment of the present invention. When the motor 17 rotates at an even speed and A phase Hall-effect information is before C phase Hall-effect information, the motor 17 rotates towards the locking direction. When the motor 17 rotates at an even speed and C phase Hall-effect information is before A phase Hall-effect information, the motor 17 rotates towards the unlocking direction. The phase difference between the A phase Hall-effect information and the C phase Hall-effect information is a predetermined value. If the phase difference between the A phase Hall-effect information and the C phase Hall-effect information is not the predetermined value, the motor 17 occurs step-out. When the phase difference between the A phase Hall-effect information and the C phase Hall-effect information exceeds the predetermined value by a certain value, (for example, the phase difference between the A phase Hall-effect information and the C phase Hall-effect information is less than 1/3 of the pulse cycle or more than 1/2 of the pulse cycle) it can be determined that the motor occurs step-out and adds one to the amount of step-out. When the motor 17 stops rotating, the amount of step-out is known. B phase Hall-effect information works as a reference standard of the phase relation and can replace A phase Hall-effect information or C phase Hall-effect information when they are in malfunction.

The central processing unit 12 sends a group of actuating pulses to the pulse modulating circuit 16. The pulse modulating circuit 16 modulates the width of the actuating pulses to change the duty cycle. Thus, the torque of the motor 17 is modulated and the motor 17 is actuated to rotate to the different aim position by sending pulses of different duty cycles.

The central processing unit 12 comprises an information collecting unit 20, a determining unit 19 and a control unit 18. The information collecting unit 20 is connected to the determining unit 19 and the motor position detecting device 15. The determining unit 19 is also connected to the control unit 18. The control unit 18 is connected to the pulse modulating circuit 16. The information collecting unit 20 is used for collecting the information of the motor rotation position from the motor position detecting device 15. The determining unit 19 is used for receiving the information of the motor rotation position from the information collecting unit 20 to determine whether the motor 17 reaches the aim gear. The control unit 18 is used for controlling the rotation of the motor 17 from the original gear to the aim gear via the pulse modulating circuit 16. The control unit 18 is further used for actuating the pulse modulating circuit 16 to resend a pulse when the motor 17 does not reach the aim gear.

The central processing unit 12 is also used for obtaining the amount of the step-out of the motor according to the information of the motor rotation position and ascertaining the amount of the pulses needed to resend according to the number of the step-out when the motor 17 does not reach the aim gear. Thus, the central processing unit 12 does not need to count the amount of the pulses and reduces the time in the operation of the gear control system.

The central processing unit 12 is also used for determining whether the motor 17 stops rotating. If the motor 17 stops rotating, it is then to determine whether the motor 17 reaches the aim gear. According to an embodiment of the present invention, it is to determine whether the motor 17 stops rotating via the Hall-effect information. When the Hall-effect information vanishes for a scheduled time, it can confirm that the motor 17 stops rotating.

The gear control system can detect the states of the motor 17, the pulse modulating circuit 16 and the motor position detecting device 15 and ceases when they works unconventionally. So the system can avoid misoperation and ensure the safety of the electric vehicle. According to an embodiment of the present invention, the gear control system further comprises a voltage detecting circuit 13 which is connected to the central processing unit 12 and an electricity detecting circuit 14 which is connected to the central processing unit 12. The voltage detecting circuit 13 is used for detecting the working voltage of the motor 17 and sending the voltage information to the central processing unit 12. The electricity detecting circuit 14 is used for detecting the working electricity of the motor 17 and sending the electricity information to the central processing unit 12. The central processing unit 12 is further used for collecting the voltage information and the electricity information and determining whether the motor 17, the pulse modulating circuit 16 and the motor position detecting device 15 work normally according to the voltage information and the electricity information. When they work unconventionally, the motor is controlled to stop working.

The gear control system further comprises a memorizer 11. The memorizer 11 is connected to the central processing unit 12. The central processing unit 12 obtains the original gear from the memorizer 11 and stores the aim gear into the memorizer 11 after the motor reaches the aim gear. According to an embodiment of the present invention, the aim gear stored in the memorizer 11 is the original gear in the next operation. Because of the memorizer 11, the gear control system can obtain the original gear directly from the memorizer 11. It reduces the time in the operation of the gear control system.

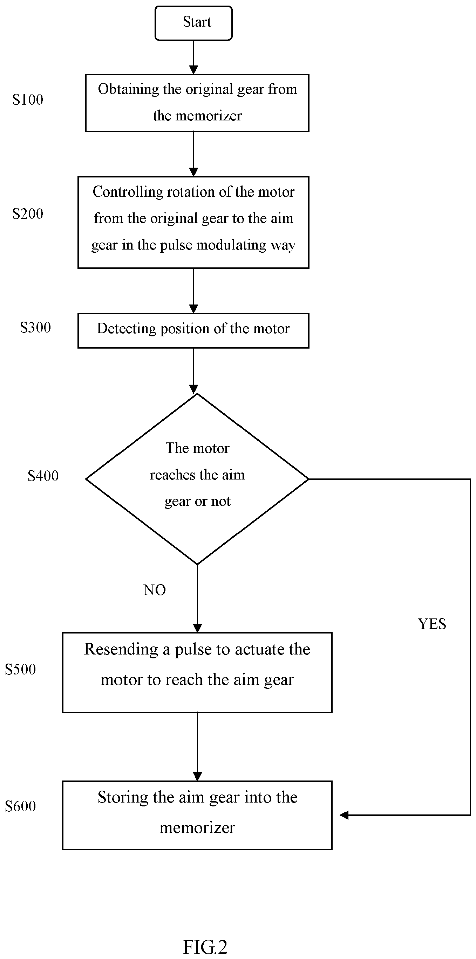

Fig. 2 is a flow chart illustrating the process of the gear control method.

As shown in Fig. 2, the gear control method comprises: controlling the rotation of the motor 17 from the original gear to the aim gear in the pulse modulating way; wherein the method further comprising: detecting the rotation position of the motor 17; determining whether the motor 17 reaches the aim gear according to the information of the rotation position of the motor; and resending a pulse to actuate the motor 17 to reach the aim gear when the motor 17 does not reach the aim gear.

The step S100 is obtaining the original gear from the memorizer 11. According to an embodiment of the present invention, the original gear is the aim gear which is latest stored in the memorizer 11.

The step S200 is controlling the rotation of the motor 17 from the original gear to the aim gear in the pulse modulating way. Thus, the torque of the motor 17 is modulated and the motor 17 is actuated to rotate to the different aim position by sending pulses of different duty cycles. Thus, the torque of the motor 17 is modulated and the motor 17 is actuated to rotate to the different aim position by sending pulses of different duty cycles. In an embodiment of the present invention, the aim position can be reached by detecting the switched gear position of a gearlever.

The step 300 is detecting the rotation position of the motor. According to an embodiment of the present invention, the step 300 is to obtain the rotation position of the motor 17, generate and then collect the Hall-effect information.

The step S400 is determining whether the motor reaches the aim gear according to the information of the motor position of the motor. If the motor reaches the aim gear, it is to turn to step S600. If the motor does not reach the aim gear, it is turn to step S500. It is to determine whether the motor 17 reaches the aim gear when the motor stops rotating. According to an embodiment of the present invention, it is to determine whether the motor 17 stops rotating via the Hall-effect information. When the Hall-effect information vanishes for a scheduled time, it can confirm that the motor 17 stops rotating.

The step S500 is resending a pulse to actuate the motor to reach the aim gear when the motor does not reach the aim gear. According to an embodiment of the present invention, it is to obtain the amount of the step-out of the motor according to the information of the motor rotation position and ascertain the amount of the pulses needed to resend according to the amount of the step-out when the motor does not reach the aim gear.

The step S600 is storing the aim gear in the memorizer 11 when the motor 17 reaches the aim gear. According to an embodiment of the present invention, the aim gear stored in the memorizer 11 is the original gear in the next operation.

The gear control method further comprises: detecting the working voltage of the motor via the voltage detecting circuit 13 and detecting the working electricity of the motor via the electricity detecting circuit 14, and exporting the voltage detecting information and the electricity detecting information; determining whether the pulse modulating circuit 16, motor 17 and motor position detecting device 15 work normally according to the voltage detecting information and the electricity detecting information and stopping the motor 17 when it works unconventionally. According to an embodiment of the present invention, this step is preformed after obtaining the original gear from the memorizer 11 via the central processing unit 12.

The principles of the preferred embodiment described herein is therefore illustrative and not restrictive, the scope of the invention being indicated in the appended claims and all variations which come within the scope of the claims are intended be embraced therein.

## Claims

1. A gear control system, comprising:
a pulse modulating circuit (16);
a motor (17);
a central processing unit (12) connected to the pulse modulating circuit (16) and arranged for controlling rotation of the motor (17) from an original gear to an aim gear via the pulse modulating circuit (16); wherein
the control system further comprises a motor position detecting device (15) which is connected to the central processing unit (12) and is arranged for detecting the motor rotation position and sending the information of the motor rotation position to the central processing unit (12), the central processing unit (12) is further arranged for determining whether the motor (17) reaches the aim gear according to the information of the motor rotation position and actuating the pulse modulating circuit (16) to resend a pulse to actuate the motor (17) to reach the aim gear when the motor (17) does not reach the aim gear.

2. The gear control system according to claim 1, wherein the motor position detecting device (15) comprising:
a Hall-effect sensor (22);
a Hall-effect information collecting circuit (21); wherein
the Hall-effect sensor (22) is connected to the Hall-effect information collecting circuit (21) and is arranged for generating Hall-effect information by inducting the rotation position of the motor and sending Hall-effect information to the Hall-effect information collecting circuit (21), the Hall-effect information collecting circuit (21) is connected to the central processing unit (12) and is arranged for collecting Hall-effect information and sending Hall-effect information to the central processing unit (12), the central processing unit (12) is arranged for ascertaining the rotation position of the motor by the Hall-effect information.

3. The gear control system according to any one of the preceding claims , wherein the central processing unit (12) is further arranged for obtaining the amount of step-out of the motor according to the information of the motor rotation position and ascertaining the amount of the pulses according to the amount of the step-out when the motor (17) does not reach the aim gear.

4. The gear control system according to any one of claims 1-3, wherein the central processing unit (12) is arranged for determining whether the motor (17) reaches the aim gear after the motor stops rotating.

5. The gear control system according to any one of the preceding claims, wherein the central processing unit (12) comprising:
an information collecting unit (20) connected to the motor position detecting device (15) and for collecting the information of the motor rotation position from the motor position detecting device (15);
a determining unit (19) connected to the information collecting unit (20) and for receiving the information of the motor rotation position from the information collecting unit (20) to determine whether the motor (17) reaches the aim gear;
a control unit (18) connected to the determining unit (19) and the pulse modulating circuit (16), which is arranged for controlling the rotation of the motor (17) from the original gear to the aim gear via the pulse modulating circuit (16), and arranged for actuating the pulse modulating circuit (16) to resend a pulse when the motor (17) does not reach the aim gear.

6. The gear control system according to any one of the preceding claims, wherein the control system further comprising:
a memorizer (11) connected to the central processing unit (12), wherein the central processing unit (12) is arranged for obtaining the original gear from the memorizer (11) and stores the aim gear into the memorizer (11) when the motor (17) reaches the aim gear.

7. A method for controlling a gear, comprising:
controlling rotation of a motor from a original gear to an aim gear in a pulse modulating way; wherein the method further comprises:
detecting the rotation position of the motor;
determining whether the motor (17) reaches the aim gear according to the information of the rotation position of the motor;
resending a pulse to actuate the motor (17) to reach the aim gear when the motor (17) does not reach the aim gear.

8. The method for controlling the gear according to claim 7, wherein the step of detecting the rotation position of the motor comprises:
detecting the rotation position of the motor and generating Hall-effect information;
collecting the Hall-effect information and ascertaining the rotation position of the motor according the Hall-effect information.

9. The method for controlling the gear according to any one of the claims 7 and 8, wherein the method further comprises:
obtaining the amount of the step-out of the motor according to the information of the motor rotation position and ascertaining the amount of the pulses needed to resend according to the amount of the step-out when the motor (17) does not reach the aim gear.

10. The method for controlling the gear according to any one of claims 7-9, wherein the step of determining whether the motor (17) reaches the aim gear according to the information of the rotation position of the motor is performed after the motor (17) stops rotating.

11. The method for controlling the gear according to any one of claims 7-10, wherein the method further comprising:
obtaining the original gear from a memorizer (11); and
storing the aim gear into the memorizer (11) when the motor (17) reaches the aim gear.

## Patentansprüche

1. Getriebesteuerungssystem, aufweisend:
einen Pulsmodulationsschaltkreis (16);
einen Motor (17);
eine Zentraleinheit (12), die mit dem Pulsmodulationsschaltkreis (16) verbunden ist und dazu eingerichtet ist, eine Drehung des Motors (17) mittels des Pulsmodulationsschaltkreises (16) von einem ursprünglichen Gang zu einem angestrebten Gang zu steuern; wobei
das Steuerungssystem ferner eine Motorstellungserfassungsvorrichtung (15) aufweist, die mit der Zentraleinheit (12) verbunden ist und dazu eingerichtet ist, die Motordrehstellung zu erfassen und die Informationen der Motordrehstellung zu der Zentraleinheit (12) zu senden, wobei die Zentraleinheit (12) ferner dazu eingerichtet ist, zu ermitteln, ob der Motor (17) den angestrebten Gang gemäß den Informationen der Motordrehstellung erreicht, und den Pulsmodulationsschaltkreis (16) zu veranlassen, einen Puls zurückzusenden, um den Motor (17) zu veranlassen, den angestrebten Gang zu erreichen, wenn der Motor (17) nicht den angestrebten Gang erreicht.

2. Getriebesteuerungssystem nach Anspruch 1, wobei die Motorstellungserfassungsvorrichtung (15) aufweist:
einen Hall-Effekt-Sensor (22);
einen Hall-Effekt-Informationenaufnahmeschaltkreis (21); wobei
der Hall-Effekt-Sensor (22) mit dem Hall-Effekt-Informationenaufnahmeschaltkreis (21) verbunden ist und dafür ausgelegt ist, durch Induzieren der Drehstellung des Motors Hall-Effekt-Informationen zu erzeugen und Hall-Effekt-Informationen zu dem Hall-Effekt-Informationenaufnahmeschaltkreis (21) zu senden, wobei der Hall-Effekt-Informationenaufnahmeschaltkreis (21) mit der Zentraleinheit (12) verbunden ist und dazu eingerichtet ist, Hall-Effekt-Informationen aufzunehmen und Hall-Effekt-Informationen zu der Zentraleinheit (12) zu senden, wobei die Zentraleinheit (12) dazu eingerichtet ist, die Drehstellung des Motors mittels der Hall-Effekt-Informationen zu ermitteln.

3. Getriebesteuerungssystem nach einem der vorhergehenden Ansprüche, wobei die Zentraleinheit (12) ferner dazu eingerichtet ist, den Betrag einer Taktabweichung des Motors gemäß den Informationen der Motordrehstellung zu erhalten und die Menge von Pulsen gemäß dem Betrag der Taktabweichung zu ermitteln, wenn der Motor (17) den angestrebten Gang nicht erreicht.

4. Getriebesteuerungssystem nach einem beliebigen der Ansprüche 1-3, wobei die Zentraleinheit (12) dazu eingerichtet ist, zu ermitteln, ob der Motor (17) den angestrebten Gang erreicht, nachdem der Motor aufhört zu rotieren.

5. Getriebesteuerungssystem nach einem der vorhergehenden Ansprüche, wobei die Zentraleinheit (12) aufweist:
eine Informationenaufnahmeeinheit (20), die mit der Motorstellungserfassungsvorrichtung (15) verbunden ist, und um die Motordrehstellung von der Motorstellungserfassungsvorrichtung (15) aufzunehmen;
eine Ermittlungseinheit (19), die mit der Informationenaufnahmeeinheit (20) verbunden ist, und um die Informationen der Motordrehstellung von der Informationenaufnahmeeinheit (20) aufzunehmen, um festzustellen, ob der Motor (17) den angestrebten Gang erreicht;
eine Steuereinheit (18), die mit der Ermittlungseinheit (19) und dem Pulsmodulationsschaltkreis (16) verbunden ist und dazu eingerichtet ist, um die Drehung des Motors (17) von dem ursprünglichen Gang zu dem angestrebten Gang mittels des Pulsmodulationsschaltkreises (16) zu steuern, und die dazu eingerichtet ist, den Pulsmodulationsschaltkreis (16) zu veranlassen, einen Puls zurückzusenden, wenn der Motor (17) den angestrebten Gang nicht erreicht.

6. Getriebesteuerungssystem nach einem der vorhergehenden Ansprüche, wobei das Steuerungssystem ferner aufweist:
eine Speichervorrichtung (11), die mit der Zentraleinheit (12) verbunden ist, wobei die Zentraleinheit (12), dazu eingerichtet ist, den ursprünglichen Gang von der Speichereinrichtung (11) zu erhalten und den angestrebten Gang in der Speichervorrichtung (11) zu speichern, wenn der Motor (17) den angestrebten Gang erreicht.

7. Verfahren zum Steuern eines Gangs, aufweisend:
Steuern einer Drehung eines Motors von einem ursprünglichen Gang zu einem angestrebten Gang in einer pulsmodulierenden Weise; wobei das Verfahren ferner aufweist:
Erfassen der Drehstellung des Motors;
Ermitteln, ob der Motor (17) den angestrebten Gang gemäß den Informationen der Drehstellung des Motors erreicht;
Zurücksenden eines Pulses, um den Motor (17) zu veranlassen, den angestrebten Gang zu erreichen, wenn der Motor (17) den angestrebten Gang nicht erreicht.

8. Verfahren zum Steuern des Gangs nach Anspruch 7, wobei der Schritt des Erfassens der Drehstellung des Motors aufweist:
Erfassen der Drehstellung des Motors und Erzeugen von Hall-Effekt-Informationen;
Aufnehmen der Hall-Effekt-Informationen und Ermitteln der Drehstellung des Motors gemäß den Hall-Effekt-Informationen.

9. Das Verfahren zum Steuern des Gangs nach einem beliebigen der Ansprüche 7 und 8, wobei das Verfahren ferner aufweist:
Erhalten des Betrages der Taktabweichung des Motors gemäß den Informationen der Motordrehstellung und Ermitteln der Anzahl von Pulsen, die gemäß dem Betrag der Taktabweichung zurückzusenden sind, wenn der Motor (17) den angestrebten Gang nicht erreicht.

10. Verfahren zum Steuern des Gangs nach einem beliebigen der Ansprüche 7-9, wobei der Schritt der Bestimmung, ob der Motor (17) den angestrebten Gang gemäß den Informationen der Drehstellung des Motors erreicht, durchgeführt wird, nachdem der Motor (17) die Drehbewegung anhält.

11. Verfahren zum Steuern des Gangs nach einem beliebigen der Ansprüche 7-10, wobei das Verfahren ferner umfasst:
Erhalten des ursprünglichen Gangs von einer Speichervorrichtung (11); und
Speichern des Gangs in der Speichervorrichtung (11), wenn der Motor (17) den angestrebten Gang erreicht.

## Revendications

1. Système de commande de rapport de vitesse, comprenant
un circuit de modulation d'impulsions (16) ;
un moteur (17);
une unité centrale de traitement (12) connectée au circuit de modulation d'impulsions (16) et conçue pour contrôler la rotation du moteur (17) d'un rapport d'origine à un rapport ciblé via le circuit de modulation d'impulsions (16) ; dans lequel le système de commande comprend en outre un dispositif de détection de position du moteur (15) qui est connecté à l'unité centrale de traitement (12) et est conçu pour détecter la position de rotation du moteur et envoyer l'information de position de rotation du moteur à l'unité centrale de traitement (12), l'unité centrale de traitement (12) est en outre conçue pour déterminer si le moteur (17) atteint le rapport de vitesse ciblé en fonction de l'information de position de rotation du moteur et actionné le circuit de modulation d'impulsions (16) afin de renvoyer une impulsion pour actionner le moteur (17) pour qu'il atteigne le rapport ciblé lorsque le moteur (17) n'atteint pas le rapport ciblé.

2. Système de commande de rapport de vitesse selon la revendication 1, dans lequel le dispositif de détection de position du moteur (15) comprend :
un capteur à effet Hall (22);
un circuit de collecte d'information d'effet Hall (21) ; dans lequel
le capteur à effet Hall (22) est connecté au circuit de collecte d'information d'effet Hall (21) et est conçu pour générer une information d'effet Hall en induisant la position de rotation du moteur et en envoyant l'information d'effet Hall au circuit de collecte d'information d'effet Hall (21), le circuit de collecte d'information d'effet Hall (21) est connecté à l'unité centrale de traitement (12) et est conçu pour collecter l'information d'effet Hall et envoyer l'information d'effet Hall à l'unité centrale de traitement (12), l'unité centrale de traitement (12) est conçue pour évaluer la position de rotation du moteur par l'information d'effet Hall.

3. Système de commande de rapport de vitesses selon l'une quelconque des revendications précédentes, dans lequel l'unité centrale de traitement (12) est en outre conçue pour obtenir le niveau de décrochage du moteur en fonction de l'information de position de rotation du moteur et évaluer la quantité d'impulsions en fonction du niveau de décrochage lorsque le moteur (17) n'atteint pas le rapport ciblé.

4. Système de commande de rapport de vitesse selon l'une quelconque des revendications 1 à 3, dans lequel l'unité centrale de traitement (12) est conçue pour déterminer si le moteur (17) atteint le rapport ciblé une fois que le moteur cesse de tourner.

5. Système de commande de rapport de vitesses selon l'une quelconque des revendications précédentes, dans lequel l'unité centrale de traitement (12) comprend :
une unité de collecte d'information (20) connectée au dispositif de détection de position de moteur (15) et destinée à collecter l'information de position de rotation du moteur dans le dispositif de détection de position de moteur (15) ;
une unité de détermination (19) connectée à l'unité de collecte d'information (20) et destinée à recevoir l'information de position de rotation du moteur de la part de l'unité de collecte d'information (20) afin de déterminer si le moteur (17) atteint le rapport ciblé ;
une unité de commande (18) connectée à l'unité de détermination (19) et au circuit de modulation d'impulsions (16) et qui est conçue pour commander la rotation du moteur (17) du rapport d'origine au rapport ciblé via le circuit de modulation d'impulsions (16) et conçue pour actionner le circuit de modulation d'impulsions (16) pour renvoyer une impulsion lorsque le moteur (17) n'atteint pas le rapport ciblé.

6. Système de commande de rapport de vitesse selon l'une quelconque des revendications précédentes, dans lequel le système de commande comprend en outre :
une mémoire (11) connectée à l'unité centrale de traitement (12), l'unité centrale de traitement (12) étant conçue pour obtenir le rapport d'origine de la part de la mémoire (11) et enregistrant le rapport ciblé dans la mémoire (11) lorsque le moteur (17) atteint le rapport ciblé.

7. Procédé de commande du rapport de vitesse, comprenant
le contrôle de la rotation d'un moteur d'un rapport d'origine à un rapport ciblé en modulant les impulsions ; ce procédé comprenant en outre :
la détection de la position de rotation du moteur ;
le fait de déterminer si le moteur (17) atteint le rapport ciblé en fonction de l'information de position de rotation du moteur ;
le renvoi d'une impulsion pour actionner le moteur (17) afin d'atteindre le rapport ciblé lorsque le moteur (17) n'atteint pas le rapport ciblé.

8. Procédé de commande du rapport de vitesse selon la revendication 7, dans lequel l'étape de détection de la position de rotation du moteur comprend :
la détection de la position de rotation du moteur et la génération d'une information d'effet Hall ;
la collecte de l'information d'effet Hall et l'évaluation de la position de rotation du moteur en fonction de l'information d'effet Hall.

9. Procédé de commande du rapport de vitesse selon l'une quelconque des revendications 7 et 8, ce procédé comprenant en outre :
l'obtention du niveau de décrochage du moteur en fonction de l'information de position de rotation du moteur et l'évaluation de la quantité d'impulsions nécessaire à un renvoi en fonction du niveau de décrochage lorsque le moteur (17) n'atteint pas le rapport ciblé.

10. Procédé de commande du rapport de vitesse selon l'une quelconque des revendications 7 à 9, dans lequel l'étape de détermination du fait que le moteur (17) atteint le rapport ciblé en fonction de l'information de position de rotation du moteur est réalisée une fois que le moteur (17) cesse de tourner.

11. Procédé de commande du rapport de vitesse selon l'une quelconque des revendications 7 à 10, ce procédé comprenant en outre :
l'obtention du rapport d'origine de la part d'une mémoire (11) ; et
la sauvegarde du rapport ciblé dans la mémoire (11) lorsque le moteur (17) atteint le rapport ciblé.
